# EUROPEAN PATENT APPLICATION

(11) **EP 4 525 549 A1**
(43) Date of publication of application: **19.03.2025**
(21) Application number: 23829703.0
(22) Date of filing: 06.05.2023
(51) Int. Cl.: H04W 76/19

(54) **RADIO RESOURCE CONTROL CONNECTION RECONFIGURATION METHOD, AND DEVICE AND STORAGE MEDIUM**

(30) Priority: 30.06.2022 CN 202210759514
(71) Applicant: ZTE Corporation, Shenzhen, Guangdong 518057 (CN)
(72) Inventor: LI, Qiang, Shenzhen, Guangdong 518057 (CN)
(74) Representative: Carangelo, Pierluigi
(86) International application number: PCT/CN2023/092525
(87) International publication number: WO 2024/001517

(57) **Abstract**

Provided in the present application are a radio resource control connection reconfiguration method, and a device and a storage medium. The method comprises: a terminal receiving a radio resource control connection reconfiguration message from a network side, wherein the radio resource control connection reconfiguration message carries a radio resource control connection reconfiguration parameter group (S100); when the radio resource control connection reconfiguration parameter group does not meet a reconfiguration success condition, generating reconfiguration suggestion data according to the capability of the terminal itself, and sending the reconfiguration suggestion data to the network side, so that the network side modifies the radio resource control connection reconfiguration message according to the reconfiguration suggestion data, which meets a preset modification condition (S110); and receiving the modified radio resource control connection reconfiguration message, which is sent from the network side, and performing reconfiguration with the network side according to the modified radio resource control connection reconfiguration message (S120).

## Description

### CROSS-REFERENCE TO RELATED APPLICATION

This application is filed on the basis of Chinese patent application No. 202210759514.X filed June 30, 2022, and claims priority to the Chinese patent application, the entire contents of which are incorporated herein by reference.

### TECHNICAL FIELD

The present disclosure relates to, but not limited to, the field of network technologies, and more particularly, to a Radio Resource Control (RRC) connection reconfiguration method, device, and a storage medium.

### BACKGROUND

RRC reconfiguration in a Long Term Evolution (LTE) network is highly purpose-driven, so reconfiguration parameters are few and targeted. If the reconfiguration fails, it indicates that the terminal device is unable to execute an operation requested by the network side.

With the advent of 5G, not all existing processes in related technologies can adapt to the reconfiguration process of 5G New Radio (NR), because there are too many reconfiguration parameters corresponding to 5G NR and the terminal device needs to support all the reconfiguration parameters in order to implement 5G NR reconfiguration. However, in actual networks, various network device vendors generally set matching reconfiguration parameters according to their respective network characteristics, and the terminal device chip vendor generally cannot set terminal device chips to support all the reconfiguration parameters according to the development progress. As a result, although a terminal device can access a network, the access may become valid after the terminal device or the network is changed, leading to a low success rate of reconfiguration.

### SUMMARY

Embodiments of the present disclosure provide an RRC connection reconfiguration method and device, and a storage medium.

**In** accordance with a first aspect of the present disclosure, an embodiment provides an RRC connection reconfiguration method, applied to a terminal device, the method including: receiving an RRC connection reconfiguration message from a network side, where the RRC connection reconfiguration message carries an RRC connection reconfiguration parameter group; in response to the RRC connection reconfiguration parameter group not satisfying a reconfiguration success condition, generating reconfiguration recommendation data according to a capability of the terminal device, and sending the reconfiguration recommendation data to the network side, such that the network side modifies the RRC connection reconfiguration message according to the reconfiguration recommendation data that satisfies a preset modification condition; and receiving the modified RRC connection reconfiguration message from the network side, and performing reconfiguration with the network side according to the modified RRC connection reconfiguration message.

In accordance with a second aspect of the present disclosure, an embodiment provides an RRC connection reconfiguration method, applied to a network side, the method including: sending an RRC connection reconfiguration message carrying an RRC connection reconfiguration parameter group to a terminal device, such that the terminal device generates reconfiguration recommendation data according to a capability of the terminal device in response to the RRC connection reconfiguration parameter group not satisfying a reconfiguration success condition; receiving the reconfiguration recommendation data from the terminal device; and in response to the reconfiguration recommendation data satisfying a preset modification condition, modifying the RRC connection reconfiguration message according to the reconfiguration recommendation data, and sending the modified RRC connection reconfiguration message to the terminal device, such that the terminal device performs reconfiguration with the network side according to the modified RRC connection reconfiguration message.

In accordance with a third aspect of the present disclosure, an embodiment provides an RRC connection reconfiguration device, including: a memory, a processor, and a computer program stored in the memory and executable by the processor, where the computer program, when executed by the processor, causes the processor to perform one of: the RRC connection reconfiguration method in accordance with the first aspect; or the RRC connection reconfiguration method in accordance with the second aspect.

In accordance with a fourth aspect of the present disclosure, an embodiment provides a computer-readable storage medium, storing computer-executable instructions which, when executed by a processor, cause the processor to perform one of: the RRC connection reconfiguration method in accordance with the first aspect; or the RRC connection reconfiguration method in accordance with the second aspect.

### BRIEF DESCRIPTION OF DRAWINGS

FIG. 1 is a schematic flowchart of an RRC connection reconfiguration method from the perspective of a terminal device according to an embodiment of the present disclosure;
FIG. 2 is a schematic flowchart of reconfiguration recommendation data according to an embodiment of the present disclosure;
FIG. 3 is a schematic flow diagram of a reconfiguration recommendation modification data set and/or a reconfiguration recommendation reference data set according to an embodiment of the present disclosure;
FIG. 4 is a schematic flowchart of an RRC connection reconfiguration failure signaling according to an embodiment of the present disclosure;
FIG. 5 is a schematic flowchart of an RRC connection reconfiguration method from the perspective of a network side according to an embodiment of the present disclosure;
FIG. 6 is a schematic flowchart of an RRC connection reconfiguration failure signaling according to another embodiment of the present disclosure;
FIG. 7 is a schematic structural diagram of a terminal device according to an embodiment of the present disclosure; and
FIG. 8 is a schematic structural diagram of a network side according to an embodiment of the present disclosure.

### DETAILED DESCRIPTION

To make the objects, technical schemes, and advantages of the present disclosure clear, the present disclosure is described in further detail in conjunction with accompanying drawings and embodiments. It should be understood that the specific embodiments described herein are merely used for illustrating the present disclosure, and are not intended to limit the present disclosure.

It is to be noted, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

### Definitions:

RRC: It refers to the Radio Resource Control layer in the LTE architecture.

RRC Connection Reconfiguration: It refers to modifying an RRC connection. For example, the network reconfigures some parameters through the RRC layer to modify network parameters, including operations such as establishing, modifying, or releasing Radio Bearers (RBs), performing an inter-network handover, setting up/modifying/releasing measurements, etc.

LTE: It refers to the long-term evolution of the Universal Mobile Telecommunications System (UMTS) technical standard formulated by the 3rd Generation Partnership Project (3GPP).

RRC reconfiguration in an LTE network is highly purpose-driven, so reconfiguration parameters are few and targeted. If the reconfiguration fails, it means that the terminal device cannot implement an operation that the network side wants the terminal device to execute.

With the advent of 5G, not all existing processes in related technologies can adapt to the reconfiguration process of 5G NR, because there are too many reconfiguration parameters corresponding to 5G NR and the terminal device needs to support all the reconfiguration parameters in order to implement 5G NR reconfiguration. In fact, many reconfiguration parameters do not have a decisive effect on 5G NR access, but are merely an option of the network.

However, in actual networks, various network device vendors generally set matching reconfiguration parameters (not all parameters are limited in 3GPP) according to their respective network characteristics, and the terminal device chip vendor generally cannot set terminal device chips to support all the reconfiguration parameters according to the development progress. Therefore, although a terminal device can access a network, the access is no longer valid after the terminal device or the network is changed, resulting in a low success rate of reconfiguration.

In the case of Non-Standalone (NSA) network, if a User Equipment (UE) intends to register with as many different 5G NR cells as possible, or an operator wants its 5G network to accept terminal devices from different vendors, a set of methods for reconfiguring RRC connections with a negotiation mechanism need to be established.

In view of the above, the embodiments of the present disclosure provide an RRC connection reconfiguration method, which can effectively improve the success rate of reconfiguration.

The embodiments of the present disclosure will be further described in detail below in conjunction with the accompanying drawings.

It can be understood that a terminal device often encounters a reconfiguration process during network access. For example, in the process of handover, Carrier Aggregation (CA) loading, and 5G NR loading in an NSA network, the network side needs to initiate an RRC connection reconfiguration process. In the RRC connection reconfiguration process, the network side generally sends an RRC connection reconfiguration message, and the terminal device executes a related operation according to RRC connection reconfiguration parameter groups in the RRC connection reconfiguration message. If the terminal device can implement the related operation for all the RRC connection reconfiguration parameter groups, the terminal device sends a reconfiguration completion message to the network side. If the terminal device cannot implement the related operation for some of the RRC connection reconfiguration parameter groups due to a capability of the terminal device, the reconfiguration fails, and the terminal device sends an RRC connection reconfiguration failure signaling to the network side for RRC connection reestablishment.

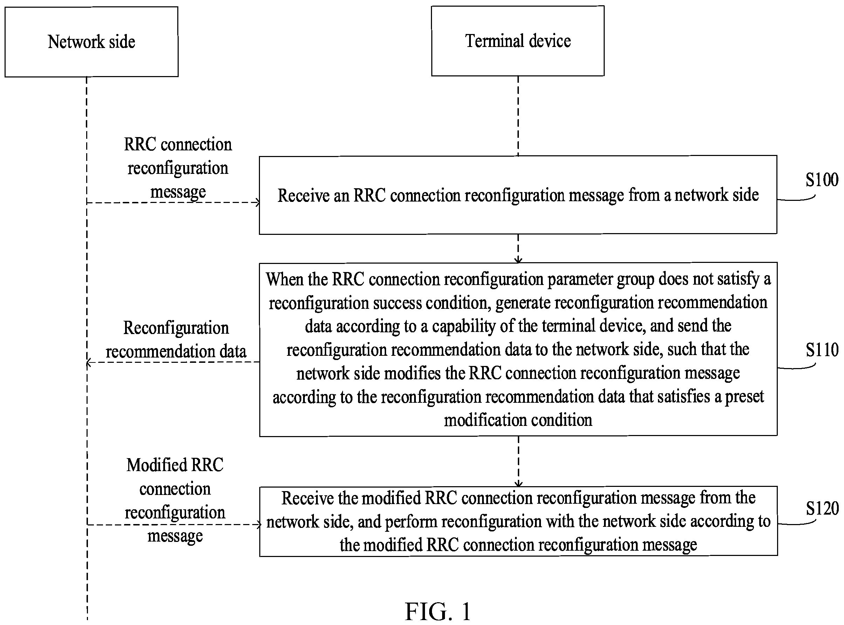

Therefore, referring to FIG. 1, in accordance with a first aspect of the present disclosure, an embodiment provides an RRC connection reconfiguration method, applied to a terminal device, the method including the following steps.

In a step of S100, an RRC connection reconfiguration message from a network side is received, where the RRC connection reconfiguration message carries an RRC connection reconfiguration parameter group.

In a step of S110, when the RRC connection reconfiguration parameter group does not satisfy a reconfiguration success condition, reconfiguration recommendation data is generated according to a capability of the terminal device, and the reconfiguration recommendation data is sent to the network side, such that the network side modifies the RRC connection reconfiguration message according to the reconfiguration recommendation data that satisfies a preset modification condition.

In a step of S120, the modified RRC connection reconfiguration message from the network side is received, and reconfiguration is performed with the network side according to the modified RRC connection reconfiguration message.

In a feasible implementation, the terminal device may be a mobile terminal device or a non-mobile terminal device. The mobile terminal device may be a mobile phone, a tablet computer, a notebook computer, a handheld computer, a vehicle-mounted terminal device, a wearable device, a super mobile personal computer, a netbook, a personal digital assistant, a Customer Premise Equipment (CPE), a UFI (wireless hotspot device), etc. The non-mobile terminal device may be a personal computer, a television, a teller machine, a self-service machine, etc., which is not particularly limited in the embodiments of the present disclosure.

The embodiment of the present disclosure is applied to the terminal device, and the terminal device receives an RRC connection reconfiguration message from a network side, where the RRC connection reconfiguration message carries an RRC connection reconfiguration parameter group. In an embodiment of the present disclosure, the terminal device needs to determine whether the RRC connection reconfiguration parameter group carried in the RRC connection reconfiguration message satisfies a reconfiguration success condition. When the RRC connection reconfiguration parameter group satisfies the reconfiguration success condition, the reconfiguration between the terminal device and the network succeeds, i.e., the reconfiguration is completed. When the RRC connection reconfiguration parameter group does not satisfy the reconfiguration success condition, the terminal device generates reconfiguration recommendation data according to a capability of the terminal device, and sends the reconfiguration recommendation data to the network side, such that the network side modifies the RRC connection reconfiguration message according to the reconfiguration recommendation data that satisfies a preset modification condition.

In an embodiment of the present disclosure, the reconfiguration recommendation data generated by the terminal device according to the capability of the terminal device is data that the terminal device can support, i.e., when the RRC connection reconfiguration parameter group does not satisfy the reconfiguration success condition, the terminal device reconfigures the data that the terminal device can support according to the capability of the terminal device, and then transmits the reconfigured data to the network side, such that the network side further determines whether the reconfigured data satisfies the preset modification condition. In another embodiment of the present disclosure, the reconfiguration recommendation data generated by the terminal device according to the capability of the terminal device is non-ignorable data not supported by the terminal device, i.e., the terminal device sends the non-ignorable data not supported by the terminal device to the network side to inform the network side that the reconfiguration recommendation data is the non-ignorable data not supported by the terminal device, whether the network side can avoid delivering the reconfiguration recommendation data, such that the network side modifies the RRC connection reconfiguration message according to the reconfiguration recommendation data that satisfies the preset modification condition.

In an embodiment of the present disclosure, the RRC connection reconfiguration parameter group may include an RRC connection reconfiguration parameter item and a value corresponding to the RRC connection reconfiguration parameter item.

In an embodiment of the present disclosure, when the reconfiguration recommendation data satisfies the preset modification condition, the network side modifies the RRC connection reconfiguration message according to the reconfiguration recommendation data that satisfies the preset modification condition. For example, during the network side modifying the RRC connection reconfiguration message, the RRC connection reconfiguration parameter group carried in the RRC connection reconfiguration parameter group is also modified. Therefore, the terminal device receives the modified RRC connection reconfiguration message from the network side, and performs reconfiguration with the network side according to the modified RRC connection reconfiguration message. In other words, after receiving the modified RRC connection reconfiguration message, the terminal device determines whether the RRC connection reconfiguration parameter group carried in the modified RRC connection reconfiguration message satisfies the reconfiguration success condition. When the RRC connection reconfiguration parameter group carried in the modified RRC connection reconfiguration message satisfies the reconfiguration success condition, the reconfiguration between the terminal device and the network succeeds. When the RRC connection reconfiguration parameter group carried in the modified RRC connection reconfiguration message does not satisfy the reconfiguration success condition, the terminal device generates new reconfiguration recommendation data according to the capability of the terminal device, and sends the new reconfiguration recommendation data to the network side, such that the network side evaluates the new reconfiguration recommendation data. The steps S100 to S120 are repeatedly executed until the reconfiguration between the terminal device and the network side succeeds or fails.

In the embodiment of the present disclosure, the terminal device can generate reconfiguration recommendation data according to the capability of the terminal device; the network side modifies the RRC connection reconfiguration message according to the reconfiguration recommendation data that satisfies the preset modification condition, and delivers the modified RRC connection reconfiguration message to the terminal device; and the terminal device performs reconfiguration with the network side according to the modified RRC connection reconfiguration message. Compared with the related technology, the embodiment of the present disclosure can effectively improve the success rate of reconfiguration between the terminal device and the network side.

It can be understood that the reconfiguration success condition includes, but not limited to, that the terminal device supports key data of the RRC connection reconfiguration parameter group.

In the embodiment of the present disclosure, the terminal device needs to determine whether the RRC connection reconfiguration parameter group carried in the RRC connection reconfiguration message satisfies the reconfiguration success condition, i.e., the terminal device checks the RRC connection reconfiguration parameter group to further determine whether the terminal device can support the key data of the RRC connection reconfiguration parameter group. For example, the key data of the RRC connection reconfiguration parameter group refers to data that the terminal device can support. For example, the key data may be a parameter item and a value corresponding to the parameter item. In some embodiments, the reconfiguration success condition may be that the terminal device supports all data of the RRC connection reconfiguration parameter group. When the RRC connection reconfiguration parameter group satisfies the reconfiguration success condition, i.e., the RRC connection reconfiguration parameter group satisfies that the terminal device supports the key data of the RRC connection reconfiguration parameter group, the reconfiguration between the terminal device and the network succeeds. In a feasible implementation, the terminal device sends a reconfiguration completion message to the network side, and the network side receives the reconfiguration completion message. Thus, the reconfiguration between the terminal device and the network side is completed. When the RRC connection reconfiguration parameter group does not satisfy the reconfiguration success condition, i.e., the terminal device does not support or cannot adapt to data of the RRC connection reconfiguration parameter group, the terminal device needs to generate reconfiguration recommendation data according to the capability of the terminal device. In other words, the reconfiguration success condition being not satisfied includes that: the terminal device does not support partial data of the RRC connection reconfiguration parameter group.

In the embodiment of the present disclosure, the terminal device determines whether the terminal device can support the key data of the RRC connection reconfiguration parameter group from the network side, i.e., determines whether the RRC connection reconfiguration parameter group satisfies the reconfiguration success condition, so as to further determine whether to generate the reconfiguration recommendation data to better adapt to the network side, thereby improving the success rate of reconfiguration between the terminal device and the network side.

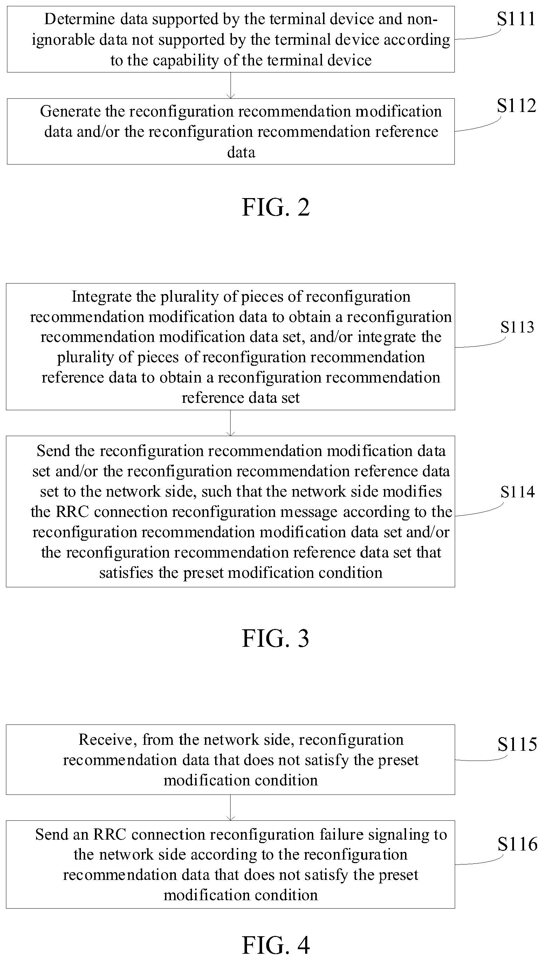

Referring to FIG. 2, it can be understood that the reconfiguration recommendation data includes reconfiguration recommendation modification data and/or reconfiguration recommendation reference data, and generating reconfiguration recommendation data according to a capability of the terminal device includes, but not limited to, the following steps.

In a step of S111, data supported by the terminal device and non-ignorable data not supported by the terminal device are determined according to the capability of the terminal device.

In a step of S112, the reconfiguration recommendation modification data and/or the reconfiguration recommendation reference data is generated, where the reconfiguration recommendation modification data is the data supported by the terminal device, and the reconfiguration recommendation reference data is the non-ignorable data not supported by the terminal device.

In the embodiment of the present disclosure, the terminal device determines, according to the capability of the terminal device, data supported by the terminal device and non-ignorable data not supported by the terminal device, and generates reconfiguration recommendation modification data and/or reconfiguration recommendation reference data. In an embodiment of the present disclosure, the reconfiguration recommendation modification data is data supported by the terminal device, and the reconfiguration recommendation reference data is non-ignorable data not supported by the terminal device. In other words, the terminal device checks the RRC connection reconfiguration parameter group, and sends all data that the terminal device does not support, such as parameter items and their values, or non-ignorable data not supported by the terminal device, to the network side as the reconfiguration recommendation reference data. While reporting the reconfiguration recommendation reference data to the network side, the terminal device may also send the reconfiguration recommendation modification data to the network side, where the reconfiguration recommendation modification data is data that the terminal device can support, which is determined according to the capability of the terminal device. By this setting, the terminal device can determine, according to the capability of the terminal device, the data supported by the terminal device and the non-ignorable data not supported by the terminal device, generates the reconfiguration recommendation modification data and/or the reconfiguration recommendation reference data, and notifies the reconfiguration recommendation modification data and/or the reconfiguration recommendation reference data to the network side, such that the network side further evaluates whether the reconfiguration recommendation data can be used. The embodiment of the present disclosure can realize adaptive reconfiguration, thereby effectively improving the efficiency of RRC connection reconfiguration.

In a feasible implementation, the terminal device can identify the RRC connection reconfiguration parameter group carried in the RRC connection reconfiguration message from the network side, i.e., the terminal device checks whether the terminal device supports the data of the RRC connection reconfiguration parameter group.

In a feasible implementation, the RRC connection reconfiguration parameter group includes an RRC connection reconfiguration parameter item and a value corresponding to the RRC connection reconfiguration parameter item. When the terminal device checks the RRC connection reconfiguration parameter group, because a certain RRC connection reconfiguration parameter item is not supported by the terminal device, the terminal device evaluates whether the RRC connection reconfiguration parameter item can be ignored. If the parameter item can be ignored, i.e., the parameter item belongs to ignorable data not supported by the terminal device, the terminal device does not notify the network side of the parameter item, and can directly ignore the parameter item. If the parameter item cannot be ignored, i.e., the parameter item belongs to non-ignorable data not supported by the terminal device, the terminal device notifies the network side that the terminal device does not support the parameter item, whether the network side can avoid delivering the parameter item. The non-ignorable data not supported by the terminal device means that the terminal device can receive the RRC connection reconfiguration parameter group although the terminal device does not support the RRC connection reconfiguration parameter group, and even if the RRC connection reconfiguration parameter group is carried in the RRC connection reconfiguration message sent by the network side, reconfiguration between the terminal device and the network side is not affected.

Referring to FIG. 3, it can be understood that the reconfiguration recommendation data includes a plurality of pieces of reconfiguration recommendation modification data and/or a plurality of pieces of reconfiguration recommendation reference data, and sending the reconfiguration recommendation data to the network side such that the network side modifies the RRC connection reconfiguration message according to the reconfiguration recommendation data that satisfies a preset modification condition includes, but not limited to, the following steps.

In a step of S113, the plurality of pieces of reconfiguration recommendation modification data are integrated to obtain a reconfiguration recommendation modification data set, and/or the plurality of pieces of reconfiguration recommendation reference data are integrated to obtain a reconfiguration recommendation reference data set.

In a step of S114, the reconfiguration recommendation modification data set and/or the reconfiguration recommendation reference data set is sent to the network side, such that the network side modifies the RRC connection reconfiguration message according to the reconfiguration recommendation modification data set and/or the reconfiguration recommendation reference data set that satisfies the preset modification condition.

In the embodiments of the present disclosure, when a plurality of RRC connection reconfiguration parameter groups do not satisfy the reconfiguration success condition, the terminal device determines which RRC connection reconfiguration parameter groups are data supported by the terminal device and/or determines which RRC connection reconfiguration parameter groups are non-ignorable data not supported by the terminal device according to the capability of the terminal device, so as to generate a plurality of pieces of reconfiguration recommendation modification data and/or a plurality of pieces of reconfiguration recommendation reference data correspondingly. Then, the terminal device integrates the plurality of pieces of reconfiguration recommendation modification data and/or the plurality of pieces of reconfiguration recommendation reference data to obtain a reconfiguration recommendation modification data set and/or a reconfiguration recommendation reference data set, and sends the reconfiguration recommendation modification data set and/or the reconfiguration recommendation reference data set to the network side, such that the network side modifies the RRC connection reconfiguration message according to the reconfiguration recommendation modification data set and/or the reconfiguration recommendation reference data set that satisfies the preset modification condition. The plurality of pieces of reconfiguration recommendation modification data are the data supported by the terminal device, and the plurality of pieces of reconfiguration recommendation reference data are the non-ignorable data not supported by the terminal device.

In the embodiment of the present disclosure, the terminal device obtains the reconfiguration recommendation modification data set and/or the reconfiguration recommendation reference data set through integration, and sends the reconfiguration recommendation modification data set and/or the reconfiguration recommendation reference data set to the network side, thereby effectively improving data transmission efficiency.

Referring to FIG. 4, it can be understood that after sending the reconfiguration recommendation data to the network side, the method includes, but not limited to, the following steps.

In a step of S115, reconfiguration recommendation data that does not satisfy the preset modification condition is received from the network side.

In a step of S116, an RRC connection reconfiguration failure signaling is sent to the network side according to the reconfiguration recommendation data that does not satisfy the preset modification condition.

In the embodiment of the present disclosure, after the terminal device sends the reconfiguration recommendation data to the network side, the network side evaluates the reconfiguration recommendation data. When the reconfiguration recommendation data does not satisfy the preset modification condition, the network side feeds back the reconfiguration recommendation data that does not satisfy the preset modification condition to the terminal device, and the terminal device sends an RRC connection reconfiguration failure signaling to the network side according to the reconfiguration recommendation data that does not satisfy the preset modification condition.

In a feasible implementation, the reconfiguration recommendation data includes reconfiguration recommendation modification data, and when the network side cannot use/support/adapt to the reconfiguration recommendation modification data, it indicates that the reconfiguration recommendation modification data does not satisfy the preset modification condition. Therefore, when the reconfiguration recommendation modification data does not satisfy the preset modification condition, the network side notifies the terminal device which specific reconfiguration recommendation modification data does not satisfy the preset modification condition. In an embodiment of the present disclosure, the terminal device receives, from the network side, reconfiguration recommendation data that does not satisfy the preset modification condition. Because the reconfiguration recommendation modification data reconfigured by the terminal device is data that the terminal device can support, and the network side cannot use the reconfiguration recommendation modification data, the terminal device sends an RRC connection reconfiguration failure signaling to the network side according to the reconfiguration recommendation modification data that does not satisfy the preset modification condition, and the network side receives the RRC connection reconfiguration failure signaling sent by the terminal device. In this case, the reconfiguration between the terminal device and the network side fails.

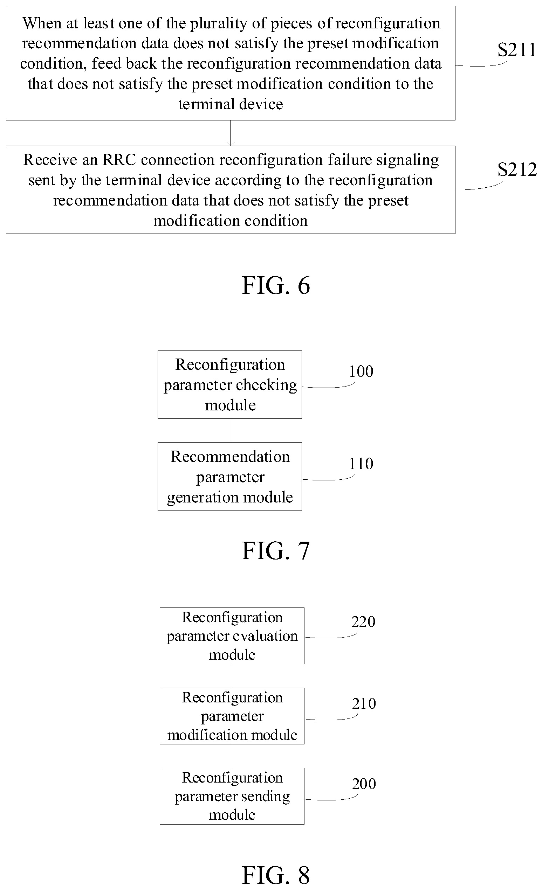

Referring to FIG. 7, in a feasible implementation, the terminal device in the embodiments of the present disclosure includes a reconfiguration parameter checking module 100 and a recommendation parameter generation module 110. The reconfiguration parameter checking module 100 is mainly configured for checking which RRC connection reconfiguration parameter groups carried in the RRC connection reconfiguration message sent by the network side are data not supported by the terminal device. The recommendation parameter generation module 110 is configured for generating reconfiguration recommendation data according to the capability of the terminal device and sending the reconfiguration recommendation data to the network side when the RRC connection reconfiguration parameter group does not satisfy the reconfiguration success condition.

Referring to FIG. 8, in a feasible implementation, the network side in the embodiments of the present disclosure includes a reconfiguration parameter sending module 200, a reconfiguration parameter modification module 210, and a reconfiguration parameter evaluation module 220. The reconfiguration parameter sending module 200 is mainly configured for providing an RRC connection reconfiguration parameter group in the RRC connection reconfiguration message. The reconfiguration parameter modification module 210 is mainly configured for performing operations such as adding, modifying, and deleting the RRC connection reconfiguration parameter group in the RRC connection reconfiguration message to obtain a modified RRC connection reconfiguration message, and sending the modified RRC connection reconfiguration message to the reconfiguration parameter sending module 200. The reconfiguration parameter evaluation module 220 is configured for receiving the reconfiguration recommendation modification data set or the reconfiguration recommendation reference data set from the terminal device, evaluating the reconfiguration recommendation modification data set or the reconfiguration recommendation reference data set to determine which reconfiguration recommendation modification can be added, modified, deleted, or otherwise processed, i.e., determine which reconfiguration recommendation modification data or reconfiguration recommendation modification data can be used by the network side, and sending an evaluation result to the reconfiguration parameter modification module 210.

In some embodiments, the terminal device and the network side in the embodiments of the present disclosure can execute a method for RRC connection reconfiguration using a negotiation mechanism. Based on the terminal device and the network side, the method for RRC connection reconfiguration in the embodiments of the present disclosure may include the following steps.

The network side sends an RRC connection reconfiguration message to the terminal device, where the RRC connection reconfiguration message carries an RRC connection reconfiguration parameter group. This step may be implemented by the reconfiguration parameter sending module 200 in the network side.

The terminal device receives the RRC connection reconfiguration message from the network side, and checks an RRC connection reconfiguration parameter group carried in the RRC connection reconfiguration message, to determine whether the RRC connection reconfiguration parameter group sent by the network side satisfies a reconfiguration success condition, i.e., determine whether the terminal device supports data of the RRC connection reconfiguration parameter group. This step may be implemented by the reconfiguration parameter checking module 100 in the terminal device.

When all RRC connection reconfiguration parameter groups in the RRC connection reconfiguration message sent by the network side satisfy the reconfiguration success condition, i.e., the terminal device supports key data or all data of the RRC connection reconfiguration parameter groups, the terminal device sends a reconfiguration completion message to the network side, and the network side receives the reconfiguration completion message. Thus, the reconfiguration between the terminal device and the network side is completed.

When part (for example, at least one) of the RRC connection reconfiguration parameter groups in the RRC connection reconfiguration message sent by the network side does not satisfy the reconfiguration success condition, i.e., the terminal device does not support partial data of the RRC connection reconfiguration parameter group, the terminal device correspondingly generates reconfiguration recommendation data according to the capability of the terminal device. For example, the reconfiguration recommendation data includes reconfiguration recommendation modification data and reconfiguration recommendation reference data, and the reconfiguration recommendation modification data is a parameter item supported by the terminal device and a value corresponding to the parameter item. Then, the terminal device integrates at least one piece of reconfiguration recommendation modification data to obtain a reconfiguration recommendation modification data set and/or integrates at least one piece of reconfiguration recommendation reference data to obtain a reconfiguration recommendation reference data set. This step may be implemented by the recommendation parameter generation module 110 in the terminal device.

The terminal device sends the reconfiguration recommendation modification data set and/or the reconfiguration recommendation reference data set to the network side.

The network side evaluates the reconfiguration recommendation modification data in the reconfiguration recommendation modification data set from the terminal device one by one to determine which reconfiguration recommendation modification data can be used and which reconfiguration recommendation modification data cannot be used. This step may be implemented by the reconfiguration parameter evaluation module 220 in the network side.

When the reconfiguration recommendation modification data set satisfies a preset modification condition, i.e., all the reconfiguration recommendation modification data in the reconfiguration recommendation modification data set can be used by the network side, it indicates that the network side accepts the reconfiguration recommendation modification data set, and modifies the RRC connection reconfiguration message according to the reconfiguration recommendation modification data set. In an embodiment of the present disclosure, the network side modifies the RRC connection reconfiguration parameter group in the RRC connection reconfiguration message according to the reconfiguration recommendation modification data set to obtain a modified RRC connection reconfiguration message, and correspondingly, the RRC connection reconfiguration parameter group carried in the RRC connection reconfiguration message is also modified accordingly. This step may be implemented by the reconfiguration parameter modification module 210 in the network side. Then, the network side sends the modified RRC connection reconfiguration message to the terminal device to continue the RRC connection reconfiguration process, i.e., the steps S100 to S220 are repeatedly executed.

When at least one reconfiguration recommendation modification data does not satisfy the preset modification condition, i.e., there is at least one piece of reconfiguration recommendation modification data in the reconfiguration recommendation modification data set that cannot be adopted by the network side, it indicates that the network side cannot fully accept the reconfiguration recommendation modification data set sent by the terminal device, and the network side feeds back the reconfiguration recommendation modification data that does not satisfy the preset modification condition to the terminal device to inform the terminal device which reconfiguration recommendation modification data cannot be adopted, and this step can be implemented by the reconfiguration parameter evaluation module 220 in the network side.

The terminal device receives from the network side, the reconfiguration recommendation modification data that does not satisfy the preset modification condition, and sends an RRC connection reconfiguration failure signaling to the network side. In this case, the reconfiguration between the terminal device and the network side fails.

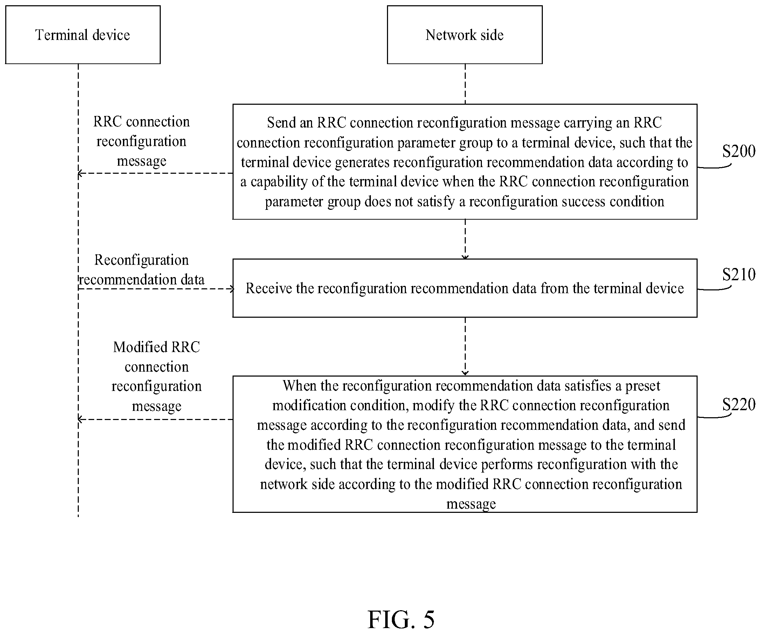

Referring to FIG. 5, in accordance with a second aspect of the present disclosure, an embodiment provides an RRC connection reconfiguration method, applied to a network side, the method including the following steps.

In a step of S200, an RRC connection reconfiguration message carrying an RRC connection reconfiguration parameter group is sent to a terminal device, such that the terminal device generates reconfiguration recommendation data according to a capability of the terminal device when the RRC connection reconfiguration parameter group does not satisfy a reconfiguration success condition.

In a step of S210, the reconfiguration recommendation data from the terminal device is received.

In a step of S220, when the reconfiguration recommendation data satisfies a preset modification condition, the RRC connection reconfiguration message is modified according to the reconfiguration recommendation data, and the modified RRC connection reconfiguration message is sent to the terminal device, such that the terminal device performs reconfiguration with the network side according to the modified RRC connection reconfiguration message.

The embodiment of the present disclosure is applied to the network side, and the network side sends an RRC connection reconfiguration message carrying an RRC connection reconfiguration parameter group to a terminal device, such that the terminal device determines whether the RRC connection reconfiguration parameter group satisfies a reconfiguration success condition. When the RRC connection reconfiguration parameter group satisfies the reconfiguration success condition, the reconfiguration between the terminal device and the network side succeeds. When the RRC connection reconfiguration parameter group does not satisfy a reconfiguration success condition, the terminal device generates reconfiguration recommendation data according to a capability of the terminal device. The network side receives the reconfiguration recommendation data from the terminal device, and then evaluates the reconfiguration recommendation data. In an embodiment of the present disclosure, the network side determines whether the reconfiguration recommendation data satisfies a preset modification condition, and when the reconfiguration recommendation data satisfies the preset modification condition, modifies the RRC connection reconfiguration message according to the reconfiguration recommendation data, and sends the modified RRC connection reconfiguration message to the terminal device, such that the terminal device performs reconfiguration with the network side according to the modified RRC connection reconfiguration message. The steps S200 to S220 are repeatedly executed until the reconfiguration between the terminal device and the network side succeeds or fails.

In an embodiment of the present disclosure, that the network side determines whether the reconfiguration recommendation data satisfies the preset modification condition may be that the network side determines whether the network side can use the reconfiguration recommendation data; when the network side can use the reconfiguration recommendation data, determines that the reconfiguration recommendation data satisfies the preset modification condition; and when the network side cannot use/support/adapt to the reconfiguration recommendation data, determines that the reconfiguration recommendation data does not satisfy the preset modification condition.

In the embodiment of the present disclosure, the network side can receive the reconfiguration recommendation data from the terminal device, modify the RRC connection reconfiguration message according to the reconfiguration recommendation data that satisfies the preset modification condition, and then delivers the modified RRC connection reconfiguration message to the terminal device, such that the terminal device performs reconfiguration with the network side according to the modified RRC connection reconfiguration message. Compared with the related technology, the embodiment of the present disclosure can effectively improve the success rate of reconfiguration between the terminal device and the network side.

It can be understood that the reconfiguration recommendation data includes a plurality of pieces of reconfiguration recommendation modification data and/or a plurality of pieces of reconfiguration recommendation reference data, and receiving the reconfiguration recommendation data from the terminal device includes, but not limited to, the following steps:
receiving a reconfiguration recommendation modification data set and/or a reconfiguration recommendation reference data set from the terminal device, where the reconfiguration recommendation modification data set is obtained by the terminal device by integrating the plurality of pieces of reconfiguration recommendation modification data, and the reconfiguration recommendation reference data set is obtained by the terminal device by integrating the plurality of pieces of reconfiguration recommendation reference data; and the reconfiguration recommendation modification data is data supported by the terminal device, and the reconfiguration recommendation reference data is non-ignorable data not supported by the terminal device.

In the embodiment of the present disclosure, the network side receives the reconfiguration recommendation modification data set from the terminal device, and when the reconfiguration recommendation modification data set satisfies the preset modification condition, modifies the RRC connection reconfiguration message according to the reconfiguration recommendation modification data set that satisfies the preset modification condition, and sends the modified RRC connection reconfiguration message to the terminal device.

For example, in the embodiment of the present disclosure, the network side further receives the reconfiguration recommendation reference data set from the terminal device, such that the network side learns that the reconfiguration recommendation reference data set is non-ignorable data not supported by the terminal device, and therefore does not deliver the reconfiguration recommendation reference data set.

In the embodiment of the present disclosure, after receiving the reconfiguration recommendation modification data set from the terminal device, the network side can directly modify the RRC connection reconfiguration parameter group in the RRC connection reconfiguration message according to the reconfiguration recommendation modification data set that satisfies the preset modification condition, to obtain a modified RRC connection reconfiguration message, thereby effectively improving the data update efficiency.

Referring to FIG. 6, it can be understood that after receiving the reconfiguration recommendation data from the terminal device, the method includes, but not limited to, the following steps.

In a step of S211, when at least one of the plurality of pieces of reconfiguration recommendation data does not satisfy the preset modification condition, the reconfiguration recommendation data that does not satisfy the preset modification condition is fed back to the terminal device.

In a step of S212, an RRC connection reconfiguration failure signaling sent by the terminal device according to the reconfiguration recommendation data that does not satisfy the preset modification condition is received.

In the embodiment of the present disclosure, the network side can evaluate the reconfiguration recommendation data. In an embodiment of the present disclosure, when at least one of the plurality of pieces of reconfiguration recommendation data does not satisfy the preset modification condition, the network side feeds back the reconfiguration recommendation data that does not satisfy the preset modification condition to the terminal device, and the terminal device sends an RRC connection reconfiguration failure signaling to the network side according to the reconfiguration recommendation data that does not satisfy the preset modification condition. In this case, the reconfiguration between the terminal device and the network side fails.

In a feasible implementation, the reconfiguration recommendation data includes reconfiguration recommendation modification data, and when the network side cannot use/support/adapt to the reconfiguration recommendation modification data, it indicates that the reconfiguration recommendation modification data does not satisfy the preset modification condition.

In an embodiment of the present disclosure, when at least one of the plurality of pieces of reconfiguration recommendation data does not satisfy the preset modification condition, e.g., when at least one piece of reconfiguration recommendation modification data in the reconfiguration recommendation modification data set does not satisfy the preset modification condition, the network side feeds back the reconfiguration recommendation modification data that does not satisfy the preset modification condition to the terminal device, to notify the terminal device of the reconfiguration recommendation modification data that does not satisfy the preset modification condition; the terminal device sends an RRC connection reconfiguration failure signaling to the network side according to the reconfiguration recommendation modification data that does not satisfy the preset modification condition; and the network side receives the RRC connection reconfiguration failure signaling from the terminal device. In this case, the reconfiguration between the terminal device and the network side fails.

For example, in the embodiment of the present disclosure, the reconfiguration recommendation data includes reconfiguration recommendation modification data and reconfiguration recommendation reference data, where the reconfiguration recommendation modification data is data supported by the terminal device, and the reconfiguration recommendation reference data is non-ignorable data not supported by the terminal device. The embodiment of the present disclosure can solve the problem of access failure caused by the terminal device not supporting data during RRC connection establishment. In an embodiment of the present disclosure, according to the capability of the terminal device, the terminal device compares with the RRC connection reconfiguration parameter group delivered by the network side, and sends the reconfiguration recommendation modification data and the non-ignorable data not supported by the terminal device, i.e., the reconfiguration recommendation reference data, to the network side. The network side determines whether to modify the RRC connection reconfiguration message and deliver the modified RRC connection reconfiguration message. The embodiment of the present disclosure can improve the success rate of LTE CA access and the success rate of terminal devices accessing 5G in the NSA architecture, and enable terminal devices supporting different parameters to access the same network side.

In accordance with a third aspect of the present disclosure, an embodiment provides an RRC connection reconfiguration device, including: a memory, a processor, and a computer program stored in the memory and executable by the processor, where the computer program, when executed by the processor, causes the processor to implement one of:
the RRC connection reconfiguration method in accordance with the first aspect; or
the RRC connection reconfiguration method in accordance with the second aspect.

In accordance with a fourth aspect of the present disclosure, an embodiment provides a computer-readable storage medium, storing computer-executable instructions which, when executed by a processor, cause the processor to implement one of:
the RRC connection reconfiguration method in accordance with the first aspect; or
the RRC connection reconfiguration method in accordance with the second aspect.

The RRC connection reconfiguration method of the embodiments of the present disclosure will be described below with reference to an embodiment. It can be understood that some data is given in the embodiments of the present disclosure for more clearly illustrating the scheme of the present embodiment, and all RRC connection reconfiguration parameter groups modified by the RRC connection reconfiguration method of the embodiments of the present disclosure in practical applications fall within the scope of protection of the present disclosure.

The embodiment of the present disclosure is applied to a terminal device and a network side. The method includes, but not limited to, the following steps.
1. The network side sends a RRC connection reconfiguration message to the terminal device, where the RRC connection reconfiguration message carries a plurality of RRC connection reconfiguration parameter groups. This step may be implemented by the reconfiguration parameter sending module 200 in the network side.
2. The terminal device receives the RRC connection reconfiguration message from the network side, and checks the plurality of RRC connection reconfiguration parameter groups carried in the RRC connection reconfiguration message. The terminal device detects that there is data not supported by the terminal device in the plurality of RRC connection reconfiguration parameter groups transmitted by the network side. In an embodiment of the present disclosure, including: 1) Demodulation Reference Signals (DM-RS) type2 in Physical Uplink Shared Channel (PUSCH); 2) Virtual Resource Blocks to Physical Resource Blocks interleaving (VRB-to-PRB interleaving) in Physical Downlink Shared Channel (PDSCH); 3) a Power New Radio (pNR) value of 23 dbm; and 4) a Secondary Node (SN) size value of 12 bits. This step may be implemented by the reconfiguration parameter checking module 100 in the terminal device.
3. The terminal device determines an RRC connection reconfiguration parameter group that does not satisfy a reconfiguration success condition in the RRC connection reconfiguration message sent by the network side, i.e., detects that the RRC connection reconfiguration parameter group is a parameter item not supported by the terminal device and a value corresponding to the parameter item.
4. The terminal device generates a plurality of pieces of reconfiguration recommendation data according to a capability of the terminal device, where the reconfiguration recommendation data includes reconfiguration recommendation modification data and reconfiguration recommendation reference data. In an embodiment of the present disclosure, the reconfiguration recommendation modification data includes: 1) PUSCH DM-RS type1; 2) deleting PDSCH VRB-to-PRB interleaving; 3) a pNR value of 20 dbm; and 4) an SN size value of 18 bits. The plurality of pieces of reconfiguration recommendation modification data are integrated to obtain a reconfiguration recommendation modification data set. This step may be implemented by the recommendation parameter generation module 110 in the terminal device.
5. The terminal device sends the reconfiguration recommendation modification data set to the network side.
6. The network side evaluates the reconfiguration recommendation modification data in the reconfiguration recommendation modification data set from the terminal device one by one, and determines through the evaluation that the network side can use all the reconfiguration recommendation modification data sets sent by the terminal device. This step may be implemented by the reconfiguration parameter evaluation module 220 in the network side.
7. The network side modifies the RRC connection reconfiguration message according to the reconfiguration recommendation modification data set. In an embodiment of the present disclosure, the network side modifies the corresponding RRC connection reconfiguration parameter groups in the RRC connection reconfiguration message according to the reconfiguration recommendation modification data set to obtain a modified RRC connection reconfiguration message. This step may be implemented by the reconfiguration parameter modification module 210 in the network side.
8. The network side sends the modified RRC connection reconfiguration message to the terminal device. It can be understood that the RRC connection reconfiguration parameter group carried in the modified RRC connection reconfiguration message is obtained by modifying original parameters according to the reconfiguration recommendation modification data set. This step may be implemented by the reconfiguration parameter sending module 200 in the network side.
9. The terminal device checks RRC connection reconfiguration parameter groups in the modified RRC connection reconfiguration message sent by the network side, and detects that the terminal device supports all the RRC connection reconfiguration parameter groups in the modified RRC connection reconfiguration message. This step may be implemented by the reconfiguration parameter checking module 100 in the terminal device.
10. The terminal device determines that the terminal device supports all the RRC connection reconfiguration parameter groups in the modified RRC connection reconfiguration message, sends a reconfiguration completion message to the network side. Thus, the reconfiguration process ends.

It can be understood that the embodiment of the present disclosure provides a method for RRC connection reconfiguration using a negotiation mechanism, which is applied to a terminal device and a network side, and has at least the following features.
1. During RRC connection reconfiguration, the terminal device checks all RRC connection reconfiguration parameter groups carried in the RRC connection reconfiguration message, and sends non-ignorable parameter items not supported by the terminal device and values corresponding to the non-ignorable parameter items, e.g., reconfiguration recommendation reference data, to the network side.
2. While sending non-ignorable data not supported by the terminal device, i.e., the reconfiguration recommendation reference data, to the network side, the terminal device also needs to correspondingly send reconfiguration recommendation modification data, e.g., a reconfiguration recommendation modification data set. The sent reconfiguration recommendation modification data set is a set of parameter items that the terminal device can support and values corresponding to the parameter items, which are configured by the terminal device according to the capability of the terminal device.
3. After receiving the reconfiguration recommendation modification data set sent by the terminal device, the network side evaluates whether the RRC connection reconfiguration message can be modified according to the recommendation of the terminal device.
4. When determining according to the recommendation of the terminal device that the RRC connection reconfiguration message can be modified, i.e., the reconfiguration recommendation modification data set satisfies the preset modification condition, the network side modifies the RRC connection reconfiguration message according to the recommendation of the terminal device, and delivers the modified RRC connection reconfiguration message. When determining according to the recommendation of the terminal device that the RRC connection reconfiguration message cannot be modified, i.e., at least one piece of reconfiguration recommendation modification data does not satisfy the preset modification condition, the network side feeds back the reconfiguration recommendation modification data that does not satisfy the preset modification condition to the terminal device, to notify the terminal device of the reconfiguration recommendation modification data that cannot be modified. The terminal device enters a reconfiguration failure process to reestablish an RRC connection.
5. The terminal device receives the modified RRC connection reconfiguration message delivered by the network side, and checks whether the terminal device supports all the modified RRC connection reconfiguration parameter groups. If the terminal device supports all the modified RRC connection reconfiguration parameter groups, the terminal device sends a reconfiguration completion message to the network side. If the terminal device does not support part of the RRC connection reconfiguration parameter groups in the modified RRC connection reconfiguration message, the terminal device continues to modify the RRC connection reconfiguration parameter groups according to the capability of the terminal device, i.e., generates reconfiguration recommendation data according to the capability of the terminal device. In an embodiment of the present disclosure, the terminal device sends non-ignorable data not supported by the terminal device, i.e., the reconfiguration recommendation reference data, and reconfiguration recommendation modification data, to the network side.
6. The process of the above features 4 and 5 is performed cyclically until the reconfiguration between the terminal device and the network side succeeds or fails.

It can be understood that when the terminal device detects that a parameter item in the RRC connection reconfiguration parameter group is not supported by the terminal device, the terminal device evaluates whether the parameter item can be ignored. If the parameter item can be ignored, the terminal device may ignore the parameter item without notifying the network side. If the parameter item cannot be ignored, the terminal device notifies the network side that the terminal device does not support the parameter item, whether the network side can avoid delivering the parameter item.

Compared with the related technology, the embodiments of the present disclosure enable terminal devices supporting different reconfiguration parameters to access a network side of the same equipment vendor (or operator), and also enable the same terminal device to access network sides of different equipment vendors (or operators), thereby improving the success rate of reconfiguration.

In an embodiment of the present disclosure, in the NSA network architecture, the embodiments of the present disclosure can realize direct quick 5G access of different terminal devices and different network sides, i.e., the embodiments of the present disclosure can be applied to a terminal device access process under a 5G NSA network architecture, to alleviate the problem of access failure caused by a reconfiguration parameter mismatch and effectively improve the success rate of reconfiguration, thereby realizing quick 5G connection. In another embodiment of the present disclosure, the embodiments of the present disclosure can be applied to an RRC connection reconfiguration process, e.g., to an LTE CA establishment process.

In the related technology, during debugging of a 5G product, RRC connection reconfiguration parameter groups generally need to be continuously modified during the access process between the network side and the terminal device, and every time the network side or the terminal device modifies the RRC connection reconfiguration parameter groups, a new round of matching needs to be performed for the modified RRC connection reconfiguration parameter groups. The RRC connection reconfiguration method according to the embodiments of the present disclosure can realize adaptive reconfiguration, i.e., the network side can be verified by the terminal device or the network side can be verified by the terminal device, thereby effectively reducing debugging time and effort and improving the efficiency of RRC connection reconfiguration. In addition, the RRC connection reconfiguration method according to the embodiments of the present disclosure can also enable a reconfiguration recommendation modification data set to be applied to meet different operator requirements.

The RRC connection reconfiguration method according to the embodiments of the present disclosure can solve the adaptation problem between products of different vendors (e.g., network devices, i.e., network side, and terminal devices). The embodiments of the present disclosure provide an adaptive method, which includes adapting reconfiguration recommendation data of a terminal device through a network side.

It can be understood that the present disclosure further provides an RRC connection reconfiguration device, including: a memory, a processor, and a computer program stored in the memory and executable by the processor, where the computer program, when executed by the processor, causes the processor to implement one of:
the RRC connection reconfiguration method applied to a terminal device; or
the RRC connection reconfiguration method applied to a network side.

The processor and the memory may be connected by a bus or in other ways.

The memory, as a non-transitory computer-readable storage medium, may be configured for storing a non-transitory software program and a non-transitory computer-executable program. In addition, the memory may include a high-speed random access memory, and may also include a non-transitory memory, e.g., at least one magnetic disk storage device, flash memory device, or other non-transitory solid-state storage device. In some implementations, the memory may include memories located remotely from the processor, and the remote memories may be connected to the processor via a network. Examples of the network include, but not limited to, the Internet, an intranet, a local area network, a mobile communication network, and combinations thereof.

In a feasible implementation, the non-transitory software program and instructions required to implement the RRC connection reconfiguration method of the foregoing embodiments are stored in the memory which, when executed by the processor, cause the processor to implement the RRC connection reconfiguration method of the foregoing embodiments, for example, implement the method steps S100 to S120 in FIG. 1, the method steps S111 to S112 in FIG. 2, the method steps S113 to S114 in FIG. 3, the method steps S115 to S116 in FIG. 4, the method steps S200 to S220 in FIG. 5, or the method steps S211 to S212 in FIG. 6.

The device embodiments described above are merely examples. The units described as separate components may or may not be physically separated, i.e., they may be located in one place or may be distributed over a plurality of network units. Some or all of the modules may be selected according to actual needs to achieve the objects of the scheme of this embodiment.

It can be understood that the present disclosure further provides a computer-readable storage medium, storing computer-executable instructions which, when executed by a processor, cause the processor to implement one of:
the RRC connection reconfiguration method applied to a terminal device; or
the RRC connection reconfiguration method applied to a network side.

In the present disclosure, the computer-executable instructions, when executed by a processor or controller, for example, by a processor in the device embodiment described above, may cause the processor to implement the RRC connection reconfiguration method of the foregoing embodiments, for example, implement the method steps S100 to S120 in FIG. 1, the method steps S111 to S112 in FIG. 2, the method steps S113 to S114 in FIG. 3, the method steps S115 to S116 in FIG. 4, the method steps S200 to S220 in FIG. 5, or the method steps S211 to S212 in FIG. 6.

The embodiments of the present disclosure include: receiving, by a terminal device, an RRC connection reconfiguration message from a network side, where the RRC connection reconfiguration message carries an RRC connection reconfiguration parameter group; when the RRC connection reconfiguration parameter group does not satisfy a reconfiguration success condition, generating, by the terminal device, reconfiguration recommendation data according to a capability of the terminal device, and sending the reconfiguration recommendation data to the network side, such that the network side modifies the RRC connection reconfiguration message according to the reconfiguration recommendation data that satisfies a preset modification condition; and receiving the modified RRC connection reconfiguration message from the network side, and performing reconfiguration with the network side according to the modified RRC connection reconfiguration message. In the embodiment of the present disclosure, the terminal device can generate reconfiguration recommendation data according to the capability of the terminal device; the network side modifies the RRC connection reconfiguration message according to the reconfiguration recommendation data that satisfies the preset modification condition, and delivers the modified RRC connection reconfiguration message to the terminal device; and the terminal device performs reconfiguration with the network side according to the modified RRC connection reconfiguration message. Compared with the related technology, the embodiment of the present disclosure can effectively improve the success rate of reconfiguration between the terminal device and the network side.

Those having ordinary skills in the art can understand that all or some of the operations in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and which can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

## Claims

1. A Radio Resource Control (RRC) connection reconfiguration method, applied to a terminal device, the method comprising:
receiving an RRC connection reconfiguration message from a network side, wherein the RRC connection reconfiguration message carries an RRC connection reconfiguration parameter group;
in response to the RRC connection reconfiguration parameter group not satisfying a reconfiguration success condition, generating reconfiguration recommendation data according to a capability of the terminal device, and sending the reconfiguration recommendation data to the network side, such that the network side modifies the RRC connection reconfiguration message according to the reconfiguration recommendation data that satisfies a preset modification condition; and
receiving the modified RRC connection reconfiguration message from the network side, and performing reconfiguration with the network side according to the modified RRC connection reconfiguration message.

2. The method of claim 1, wherein the reconfiguration success condition comprises that:
the terminal device supports key data of the RRC connection reconfiguration parameter group.

3. The method of claim 1, wherein the reconfiguration recommendation data comprises reconfiguration recommendation modification data and/or reconfiguration recommendation reference data, and generating reconfiguration recommendation data according to a capability of the terminal device comprises:
determining data supported by the terminal device and non-ignorable data not supported by the terminal device according to the capability of the terminal device; and
generating the reconfiguration recommendation modification data and/or the reconfiguration recommendation reference data, wherein the reconfiguration recommendation modification data is the data supported by the terminal device, and the reconfiguration recommendation reference data is the non-ignorable data not supported by the terminal device.

4. The method of claim 3, wherein the reconfiguration recommendation data comprises a plurality of pieces of reconfiguration recommendation modification data and/or a plurality of pieces of reconfiguration recommendation reference data, and sending the reconfiguration recommendation data to the network side, such that the network side modifies the RRC connection reconfiguration message according to the reconfiguration recommendation data that satisfies a preset modification condition comprises:
integrating the plurality of pieces of reconfiguration recommendation modification data to obtain a reconfiguration recommendation modification data set, and/or integrating the plurality of pieces of reconfiguration recommendation reference data to obtain a reconfiguration recommendation reference data set; and
sending the reconfiguration recommendation modification data set and/or the reconfiguration recommendation reference data set to the network side, such that the network side modifies the RRC connection reconfiguration message according to the reconfiguration recommendation modification data set and/or the reconfiguration recommendation reference data set that satisfies the preset modification condition.

5. The method of any one of claims 1 to 4, wherein after sending the reconfiguration recommendation data to the network side, the method further comprises:
receiving, from the network side, reconfiguration recommendation data that does not satisfy the preset modification condition; and
sending an RRC connection reconfiguration failure signaling to the network side according to the reconfiguration recommendation data that does not satisfy the preset modification condition.

6. A Radio Resource Control (RRC) connection reconfiguration method, applied to a network side, the method comprising:
sending an RRC connection reconfiguration message carrying an RRC connection reconfiguration parameter group to a terminal device, such that the terminal device generates reconfiguration recommendation data according to a capability of the terminal device in response to the RRC connection reconfiguration parameter group not satisfying a reconfiguration success condition;
receiving the reconfiguration recommendation data from the terminal device; and
in response to the reconfiguration recommendation data satisfying a preset modification condition, modifying the RRC connection reconfiguration message according to the reconfiguration recommendation data, and sending the modified RRC connection reconfiguration message to the terminal device, such that the terminal device performs reconfiguration with the network side according to the modified RRC connection reconfiguration message.

7. The method of claim 6, wherein the reconfiguration recommendation data comprises a plurality of pieces of reconfiguration recommendation modification data and/or a plurality of pieces of reconfiguration recommendation reference data, and receiving the reconfiguration recommendation data from the terminal device comprises:
receiving a reconfiguration recommendation modification data set and/or a reconfiguration recommendation reference data set from the terminal device, wherein the reconfiguration recommendation modification data set is obtained by the terminal device by integrating the plurality of pieces of reconfiguration recommendation modification data, and the reconfiguration recommendation reference data set is obtained by the terminal device by integrating the plurality of pieces of reconfiguration recommendation reference data; and the reconfiguration recommendation modification data is data supported by the terminal device, and the reconfiguration recommendation reference data is non-ignorable data not supported by the terminal device.

8. The method of claim 6, wherein after receiving the reconfiguration recommendation data from the terminal device, the method further comprises:
in response to at least one of the plurality of pieces of reconfiguration recommendation data not satisfying the preset modification condition, feeding back the reconfiguration recommendation data that does not satisfy the preset modification condition to the terminal device; and
receiving an RRC connection reconfiguration failure signaling sent by the terminal device according to the reconfiguration recommendation data that does not satisfy the preset modification condition.

9. A Radio Resource Control (RRC) connection reconfiguration device, comprising: a memory, a processor, and a computer program stored in the memory and executable by the processor, wherein the computer program, when executed by the processor, causes the processor to perform one of:
the RRC connection reconfiguration method of any one of claims 1 to 5; or
the RRC connection reconfiguration method of any one of claims 6 to 8.10. A computer-readable storage medium, storing computer-executable instructions which, when executed by a processor, cause the processor to perform one of:
the RRC connection reconfiguration method of any one of claims 1 to 5; or
the RRC connection reconfiguration method of any one of claims 6 to 8.
